Europäisches Patentamt

European Patent Office

Office européen des brevets

(11) Publication number: **0 025 677**
**B1**

(12) # EUROPEAN PATENT SPECIFICATION

(45) Date of publication of patent specification: 02.01.85

(51) Int. Cl.⁴: **B 60 B 23/12, B 60 B 35/10**

(21) Application number: 80303122.8

(22) Date of filing: 05.09.80

(54) **Wheels manually adjustable for varying track.**

(30) Priority: 24.07.80 GB 8024196
18.09.79 DK 3883/79

(43) Date of publication of application:
25.03.81 Bulletin 81/12

(45) Publication of the grant of the patent:
02.01.85 Bulletin 85/01

(84) Designated Contracting States:
AT BE CH DE FR IT LI NL SE

(56) References cited:
DE-A-2 609 031
DE-C- 928 868
GB-A- 626 840
GB-A- 666 112

(73) Proprietor: GKN Sankey Limited
Hadley Castle Works Telford
Salop TF1 4RE (GB)

(72) Inventor: Edwards, Michael Frederick
8 Greenway Gardens
Pattingham Wolverhampton, West Midlands
(GB)
Inventor: Williams, Edward
No. 1 Red Rock Drive
Codsall Wolverhampton, West Midlands (GB)
Inventor: Sayer, John
14 Dunval Road
Bridgnorth, Shropshire (GB)
Inventor: Luter, Charles Herbert
Highfield Canongate
Oaken Gates Telford, Shropshire (GB)
Inventor: Lethin, Nils Lau
Kobbelskoven 41
DK-6000 Kolding (DK)
Inventor: Moeller, Johan
Iver Dahlsvej 7
DK-6640 Lunderskov (DK)
Inventor: Holm, Bjarne Rene
Ahornvej 38
DK-6580 Vamdrup (DK)

Courier Press, Leamington Spa, England.

**0 025 677**

(74) Representative: **Robertson, Bernard Collett et al
Guest Keen and Nettlefolds plc Group Patents
and Licensing Department P.O. Box 55 Ipsley
House Ipsley Church Lane
Redditch Worcestershire B98 0TL (GB)**

## Description

This invention relates to a manually adjustable wheel for a high horse power vehicle such as an agricultural tractor.

It is known to provide agricultural tractors with manually adjustable wheels whereby the track, i.e. the spacing between the driven wheels of the tractor, may be adjusted to suit its use in differing agricultural situations where for example differing widths of rows of crops have to be traversed by the tractor. Such known manually adjustable wheels usually comprise a rim detachably secured to a disc which is itself detachably secured in conventional manner to a hub at the end of a drive shaft. The means for detachably securing the rim to the disc usually comprises a plurality of lugs spaced apart circumferentially around the radially inner surface of the rim.

The disc usually comprises a generally circular steel element having a scalloped periphery, the apices of the scallops providing circumferentially spaced apart portions of the disc adjacent the rim which are bolted to the lugs.

It is also known, as exemplified by DE—C— 928,868, to have a wheel, e.g. for a commercial vehicle, where the disc is welded to the rim and the disc presents an octagonal shape having four longer sides alternating with four shorter sides. The disc is initially square but the corners of the disc are bent back and welded to the rim. It is also known to have such a wheel where the disc is rivetted to the rim.

Generally such square discs are used in welded wheels when the wheel is intended to perform a lighter duty than a wheel of corresponding size in which a circular disc is used and there is a continuous weld between the rim and the disc around substantially the whole of the circumference of the disc.

It is an object of the invention to provide a manually adjustable wheel of improved performance and particularly suitable for use on tractors of high power.

According to the invention we provide a manually adjustable wheel for a vehicle, e.g. a tractor, comprising:

a rim to receive a tyre;

a plurality of fixing lugs spaced apart around the radially inner periphery of the rim;

a disc of uniform thickness for connection to a hub of the vehicle; and bolt means detachably securing the disc to the lugs, the disc and lugs being arranged so that the disc may be selectively secured to the lugs in either of two axially spaced positions; characterised in that:

the disc has substantially the shape of a square with the corners cut off so that the disc has an irregular octagonal shape having a generally flat outer portion which is generally perpendicular to the rotary axis of the wheel and which has four longer sides and four shorter sides arranged alternately around the periphery of the octagon; in that each of the lugs is channel-shaped with the lugs arranged in pairs so that the circumferential spacing between the lugs of each pair is less than the circumferential spacing between adjacent lugs of adjacent pairs; the lugs being of equal length considered parallel to the rotary axis of the wheel with their one ends co-planar and their other ends co-planar; in that each lug has, formed integrally with each wall of the channel, a flange which overlies and is welded directly to the inner surface of the rim; in that each of the shorter sides of the disc is juxtaposed against the ends of a pair of lugs; and in that the bolt means is located along the shorter sides of the disc only and, at each of said shorter sides comprises two bolts passing through the disc and through the lugs of the pair of lugs juxtaposed to said shorter side.

The lugs may be arranged either with their channels extending parallel to the rotary axis of the wheel or at right angles to such rotary axis.

The features of the invention will become apparent from the following description given herein solely by way of example with reference to the accompanying drawings wherein

FIGURES 1 and 2 are axial views of manually adjustable wheels constructed in accordance with the prior art;

FIGURE 3 is an axial view of a manually adjustable wheel constructed in accordance with a first embodiment of the invention;

FIGURE 4 is a cross-sectional view on the line 4—4 of Figure 3;

FIGURE 5 is an axial view of a manually adjustable wheel constructed in accordance with a second embodiment of the invention; and

FIGURE 6 is a cross-sectional view on the line 6—6 of Figure 5.

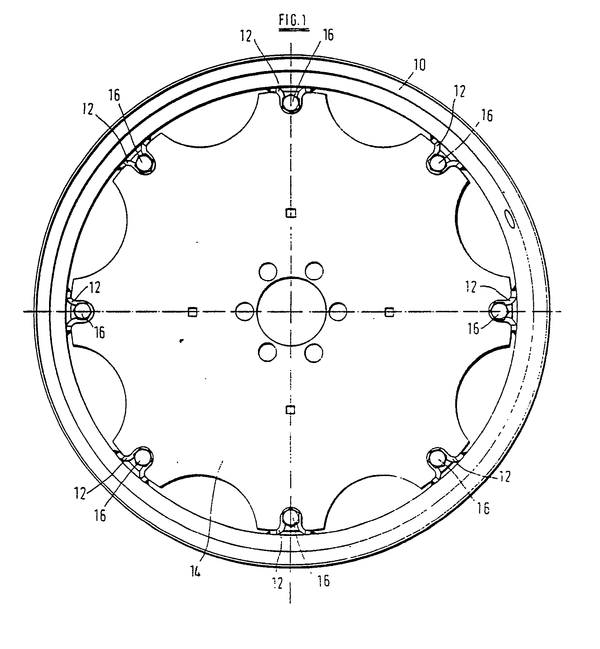

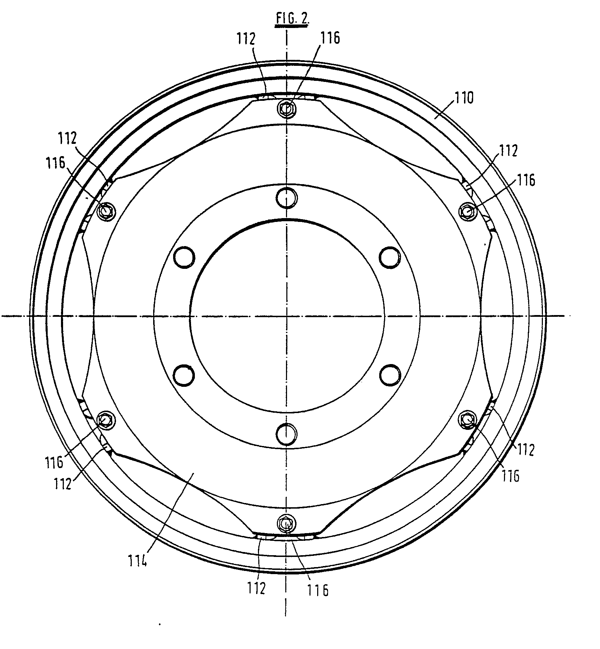

Figures 1 and 2 of the drawings show manually adjustable tractor wheels as constructed by prior art methods. Thus, referring to Figure 1, it will be seen that the wheel rim 10 is provided on its radially inner surface with a set of eight equi-distantly spaced apart lugs 12 welded to the rim. The disc 14, which is detachably secured to the rim lugs 12 by means of bolts 16, is of generally circular configuration but has a scalloped periphery with the apices of the scallops providing portions adjacent the rim which are boltable to the lugs.

Figure 2 of the drawings shows a similar construction of wheel wherein six circumferentially spaced lugs 112 are provided on the rim 110 to which six corresponding portions of a generally circular disc 114 are boltable.

In each case the variation in track is obtained by (1) varying the surface of the disc which is in contact with the hub and (2) varying the ends of the lugs against which the disc abuts.

In each of the constructions shown in Figures 1 and 2 the construction of the disc 14 is extremely wasteful of metal since it is generally circular and is usually produced as a steel stamping out of a square or rectangular blank.

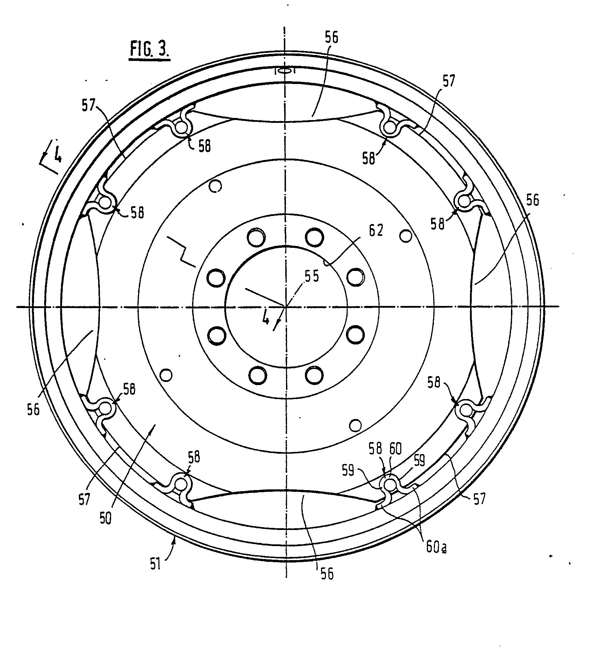

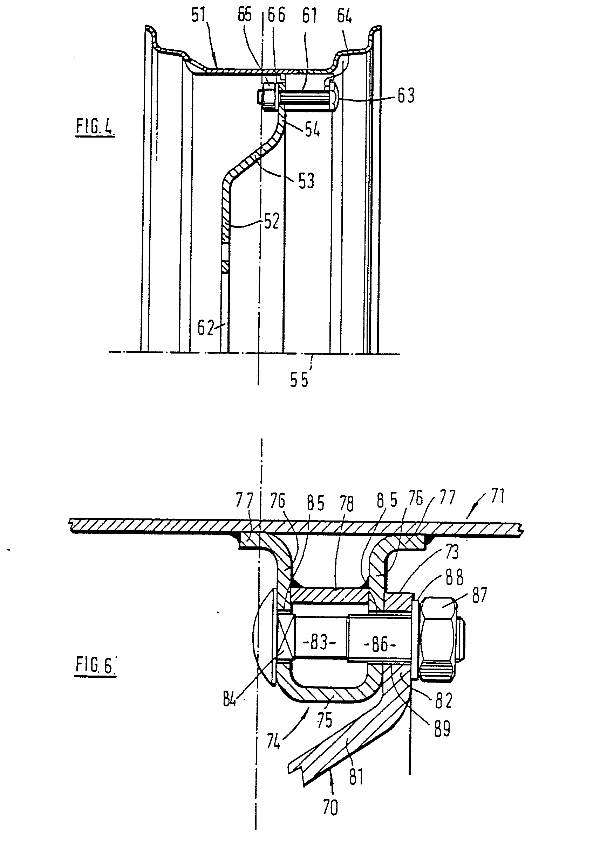

Referring to Figures 3 and 4, these show a first embodiment of the invention. There is a disc 50 secured to a rim 51. The disc has a central planar portion or nave 52 and a conical portion 53 leading to a portion 54 which is perpendicular to the rotary axis 55 of the wheel. The disc is made from a square blank and as shown in Figure 3 is generally octagonal in shape having four longer sides 56 which alternate, around the periphery of the disc, with shorter sides 57. Production of such a square disc from a square or rectangular blank is evidently not very wasteful of material and indeed the total amount of material present in the disc can be reduced in comparison with that used in the discs of the prior art. It will be noted that the longer sides 56 are slightly concave towards the centre of the disc while the shorter sides 57 are convex towards the centre of the disc.

Secured to the radially inner periphery of the rim are eight lugs 58. These lugs are of generally top hat section and provide, referring to one of the lugs, a channel having sides 59, a base 60 and flanges 60a. The flanges 60a are welded to the rim and the channel in the lug extends generally parallel to the rotary axis of the wheel and receives a bolt 61 which passes through the lug and through an aperture in the disc. Each bolt has a head 63 which is prevented from turning by a rib 64 under the head which fits in the channel of the lug as shown in Figure 4, and carries a nut and washer 65 and 66 respectively. It will be noted that the apertures and the bolts 61 are located on the shorter sides only of the disc.

Variation in track of a vehicle having wheels as shown in Figures 3 and 4 is obtained either by reversing the disc 50 and/or, by arranging the part 54 of the disc at one side or the other of the lugs 58. Thus the bolts 61 can be withdrawn and the rim turned to clear the lugs from the shorter sides 57 and then the disc moved axially of the rim to the other ends of the lugs 58, the disc again turned and the shorter sides bolted to the lugs in engagement with the other ends thereof. Obviously the vehicle would have to be jacked up during this procedure. The disc is shown in Figure 4 diverging towards the right in that figure. The disc and the rim could be assembled with the disc diverging towards the left in that figure and engaged either with either ends of the lugs 58. It will thus be seen that there is a number of different configurations which will vary the track of the vehicle fitted with the wheels.

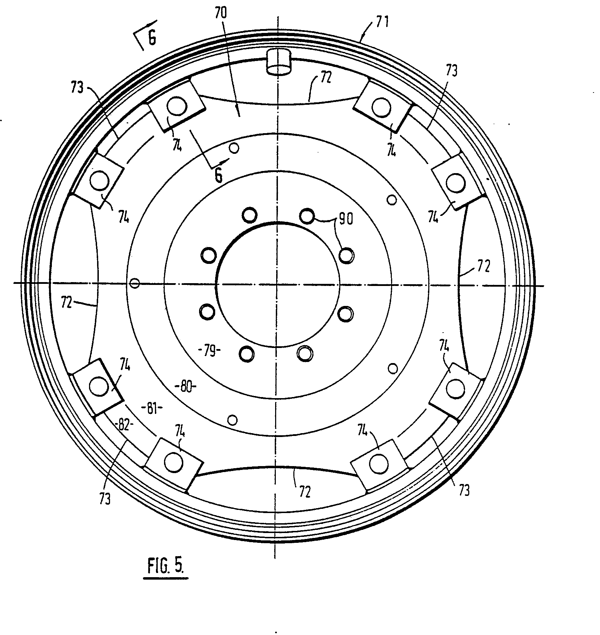

Referring now to Figures 5 and 6, these show a second embodiment of the invention comprising a disc 70 and a rim 71. As shown in Figure 5, the disc has been made from a square blank and has four longer sides 72 and four shorter sides 73 so that it has the shape of an irregular octagon. It will be noted that the longer sides 72 are slightly concave towards the centre of the disc while the shorter sides 73 are slightly convex relative to the centre of the disc.

The rim is secured to the disc by lugs and bolts as before. The lugs are indicated at 74 and as shown in Figure 6 are of top hat cross-section having a base 75, side walls 76 and flanges 77. The flanges 77 are welded to the rim so that the channels in the top hat section extend perpendicular to the rotary axis of the wheel. Each lug is strengthened by a gusset plate 78.

The disc 70 has a central portion 79 adapted to be secured to the hub of a vehicle via apertures 90 and bolts or studs (not shown), it then has a portion 80 which is perpendicular to the rotary axis of the wheel but displaced from the portion 79, outwardly of the portion 80 is a conical portion 81 which then leads to a portion 82 perpendicular to the rotary axis of the wheel. The portion 82 provides the shorter sides 73.

The disc is secured to the wheel by bolts 83 which have squared portions 84 on their shanks to engage in square section holes 85 in the walls 76 of a lug, each bolt having a threaded portion 86 to receive a nut 87 and washer 88.

It will be noted that the bolts 83 pass through apertures 89 in the disc and that these apertures are located in the shorter sides 73. Variation in track of a vehicle having wheels is shown in Figures 5 and 6 is obtained as before either by reversing the position of the disc and/or by changing the ends of the lugs against which the shorter sides 82 of the disc abut.

It will be seen that the invention provides wheels, specially for tractors, in which the discs can be made from square blanks with very little waste in material as compared with the considerable waste in material involved where the blanks are circular as shown in Figures 1 and 2 which relate to the prior art.

## Claims

1. A manually adjustable wheel for a vehicle, e.g. a tractor, comprising:
   a rim (51 or 71) to receive a tyre;
   a plurality of fixing lugs (58 or 74) spaced apart around the radially inner periphery of the rim;
   a disc (50 or 70) of uniform thickness for connection to a hub of the vehicle; and bolt means (61, 65 or 83, 87) detachably securing the disc to the lugs, the disc and lugs being arranged so that the disc may be selectively secured to the lugs in either of two axially spaced positions; characterised in that:
   the disc (51 or 71) has substantially the shape of a square with the corners cut off so that the disc has an irregular octagonal shape having a generally flat outer portion (54 or 82) which is generally perpendicular to the rotary axis of the wheel and which has four longer sides (56 or 72) and four shorter sides (57 or 73) arranged alternately around the periphery of the octagon; in that each of the lugs (58 or 74) is channel-shaped with the lugs arranged in pairs so that the circumferential spacing between the lugs of each pair is less than the circumferential spacing between adjacent lugs of adjacent pairs; the lugs being of equal length considered parallel to the rotary axis of the wheel with their one ends co-planar and their other ends co-planar; in that each lug has, formed integrally with each wall of the channel, a flange (60a or 77) which overlies and is welded directly to the inner surface of the rim; in that each of the shorter sides (57 or 73) of the disc is juxtaposed against the ends of a pair of lugs (58 or 74); and in that the bolt means is located along the shorter sides of the disc only and, at each of said shorter sides comprises two bolts (61 or 83) passing through the disc and through the lugs of the pair of lugs juxtaposed to said shorter side.

2. A wheel according to Claim 1 characterised in that the channels in the lugs (58) extend parallel to the rotary axis of the wheel and each is shaped closely to embrace one of said bolts (61) which extends lengthwise through the channel.

3. A wheel according to Claim 1 characterised in that the channels in the lugs (74) extend perpendicular to the rotary axis of the wheel and each lug receives one of said bolts (83) extending transversely across the channel and through the walls (76) thereof.

**Revendications**

1. Roue réglable manuellement, destinée à un véhicule tel qu'un tracteur, du type qui comprend:

une jante (51, 71) destinée à porter un bandage pneumatique,

plusieurs pattes de fixation (58, 74) espacées à la périphérie radialement interne de la jante,

un disque (50, 70) d'épaisseur uniforme, destiné à être monté sur un moyeu du véhicule, et des boulons (61, 65; 83, 87) destinés à fixer de façon amovible le disque sur les pattes, le disque et les pattes étant disposés de manière que le disque puisse être fixé sélectivement aux pattes dans l'une de deux positions axialement distantes, caractérisée en ce que:

le disque (51, 71) a pratiquement la forme d'un carré dont les coins sont découpés de manière que le disque ait une configuration octogonale irrégulière comprenant une partie externe plate de façon générale (54, 82) qui est perpendiculaire de façon générale à l'axe de rotation de la roue et qui a quatre grands côtés (56, 72) et quatre petits côtés (57, 73) disposés en alternance à la périphérie de l'octogone, en ce que chacune des pattes (58, 74) a une forme en U, les pattes étant disposées par paires afin que l'espacement circonférentiel des pattes de chaque paire soit inférieur à celui des pattes adjacentes des paires adjacentes, les pattes ayant une même longueur parallèlement à l'axe de rotation de la roue, leurs premières extrémités étant coplanaires et leurs autres extrémités étant aussi coplanaires, en ce que chaque patte a un flasque (60a, 77) solidaire de chaque paroi de la partie en U et recouvrant la surface interne de la jante à laquelle elle est directement soudée, en ce que chacun des petits côtés (57, 73) du disque est juxtaposé aux extrémités d'une paire de pattes (58, 74), et en ce que des boulons sont placés le long des petits côtés du disque uniquement et chaque petit côté a deux boulons (61, 83) qui traversent le disque et les pattes de la paire juxtaposée à ce petit côté.

2. Roue selon la revendication 1, caractérisé en ce que les parties en U des pattes (58) sont parallèles à l'axe de rotation de la roue et chaque patte a une forme épousant étroitement l'un des boulons (61) disposés longitudinalement dans la partie en U.

3. Roue selon la revendication 1, caractérisée en ce que les parties en U des pattes (74) sont perpendiculaires à l'axe de rotation de la roue, et chaque patte loge l'un des boulons (83) disposés transversalement à la partie en U et à travers les parois (76) de celle-ci.

**Patentansprüche**

1. Von Hand verstellbares Rad für ein Fahrzeug, wie z.B. einen Traktor, bestehend aus:

einer Felge (51 oder 71) zur Aufnahme eines Reifens;

einer Vielzahl vin in einem Abstand von einander um den radial inneren Umfang der Felge angeordneten Befestigungsnasen (58 oder 74);

einer Scheibe (50 oder 70) gleichmäßiger Stärke zur Verbindung mit einer Fahrzeugnabe und die Scheibe an den Nasen lösbar befestigenden Schrauben (61, 65 oder 83, 87), wobei die Scheibe und Nasen so angeordnet sind, daß die Scheibe an den Nasen wahlweise in einer der beiden in einem achsialen Abstand voneinander sich befindenden Stellungen befestigt werden kann, dadurch gekennzeichnet, daß

die Scheibe (51 oder 71) im wesentlichen die Form eines Quadrats mit abgeschnittenen Ecken hat, so daß die Scheibe eine unregelmäßige achteckige Form hat mit einem im allgemeinen flachen äußeren Teil (54 oder 82), der sich im allgemeinen senkrecht zur der Drehachse des Rads erstreckt und der vier längere Seiten (56 oder 72) und vier kürzere Seiten (57 oder 73) aufweist, die abwechselnd um den Umfang des Achtecks angeordnet sind, daß jede des Nasen (58 oder 74) kanalförmig ausgeführt ist, wobei die Nasen paarweise angeordnet sind, so daß der Abstand auf dem Umfang zwischen den Nasen eines jeden Paars geringer ist als der Abstand auf dem Umfang zwischen benachbarten Nasen des benachbarten Paars, wobei die Nasen gleicher Länge als parallel zu der Drehachse des Rads angesehen werden und die einen Enden sowie die anderen Enden in derselben Ebene liegen, daß jede Nase einen einteilig mit jeder Kanalwand ausgebildeten Flansch (60a oder 77) aufweist, der auf der Innenfläche der Felge aufliegt und direkt mit dieser verschweißt ist, daß jede der kürzeren Seiten (57 oder 73) der Scheibe an die Enden eines Nasenpaars (58 oder 74) angrenzt und daß die Schrauben sich nur an den kürzeren Seiten der Schreibe befinden und an jeder der kürzeren Seiten sich zwei Schrauben (61 oder 83) befinden, die durch die Scheibe und durch die Nasen des an die kürzere Seite angrenzenden Nasenpaars hindurchreichen.

2. Rad nach Anspruch 1, dadurch gekennzeichnet, daß die Kanäle in den Nasen (58) sich parallel zu der Drehachse des Rads erstrecken und daß jeder so geformt ist, daß er eine der Schrauben (61), die sich in Längsrichtung durch den Kanal erstreckt, eng umschließt.

3. Rad nach Anspruch 1, dadurch gekennzeichnet, daß sich die Kanäle in den Nasen (74) senkrecht zu der Drehachse des Rads erstrecken und daß jede Nase eine der Schrauben (83), die sich quer durch den Kanal und seine Wände (76) erstreckt, aufnimmt.

FIG.1

FIG. 2.

**FIG. 3.**

FIG. 4.

FIG. 6.

4

FIG. 5.